# FASCICULE DE BREVET EUROPEEN

(11) **EP 2 604 879 B1**
(45) Date de publication et mention de la délivrance du brevet: **18.03.2015**
(21) Numéro de dépôt: 12195973.8
(22) Date de dépôt: 06.12.2012
(51) Int. Cl.: F16D 11/10

(54) **Dispositif de connexion sélective d'un motoréducteur à une roue d'aéronef, pour permettre son entraînement sélectif par le motoréducteur**
Vorrichtung zur selektiven Verbindung eines Getriebemotors mit einem Rad eines Luftfahrzeugs zum selektiven Antrieb dieses Rads durch den Getriebemotor
A device for selectively connecting a gearmotor to an aircraft wheel to enable the wheel to be driven selectively by the gearmotor.

(30) Priorité: 15.12.2011 FR 1161710
(43) Date de publication de la demande: 19.06.2013
(73) Titulaire: Messier-Bugatti-Dowty, 78140 Vélizy-Villacoublay (FR)
(72) Inventeur: Eluard, Gilles, 78140 Velizy-Villacoublay (FR)
(74) Mandataire: Parzy, Benjamin Alain

(56) Documents cités:
- DE-C- 913 969
- FR-A1- 2 954 752
- US-A- 2 425 583
- US-A1- 2003 066 701

## Description

L'invention concerne un dispositif de connexion sélective d'un motoréducteur à une roue d'aéronef, pour permettre son entraînement sélectif par le motoréducteur.

### ARRIERE PLAN TECHNOLOGIQUE DE L'INVENTION

On connaît du document FR2954752 un ensemble de roue et frein avec un motoréducteur disposé pour entraîner la roue en rotation. Le frein comporte un porte-actionneurs de freinage qui porte également le motoréducteur. Une couronne dentée en engrènement permanent avec le motoréducteur est portée par le porte-actionneurs de freinage. Un organe d'embrayage permet de connecter sélectivement la couronne dentée et la roue pour permettre l'entraînement de la roue par le motoréducteur. En l'occurrence, cet organe est un embrayage électromagnétique qui s'étend également autour du porte-actionneurs.

Bien que présentant de nombreux avantages, ce type de dispositif peut parfois être difficile à loger dans l'environnement encombré d'une roue d'aéronef. Il existe donc un besoin pour un dispositif de connexion d'un motoréducteur à une roue d'aéronef plus facilement logeable.

En particulier, on a pensé à rendre la couronne dentée solidaire en rotation de la roue, et d'interposer entre le motoréducteur et la couronne dentée un dispositif de connexion à pignon baladeur. A cet égard, on connaît des dispositifs dans lesquels le pignon est monté coulissant sur un arbre par l'intermédiaire de cannelures qui permettent l'entraînement en rotation du pignon par l'arbre tout en permettant le déplacement axial du pignon entre une position escamotée dans laquelle le pignon est éloigné de la couronne et une position en prise dans laquelle le pignon engrène avec la couronne dentée. Des moyens de déplacement permettent de déplacer sélectivement le pignon d'une position à une autre.

### OBJET DE L'INVENTION

L'invention a pour objet de proposer un dispositif de connexion à pignon baladeur pour connecter un motoréducteur à une roue d'aéronef.

### BREVE DESCRIPTION DE L'INVENTION

En vue de la réalisation de ce but, on propose un dispositif de connexion d'un motoréducteur à une roue d'aéronef, comportant :
- un carter portant à rotation un arbre destiné à être entraîné par le motoréducteur, l'arbre ayant une portion cannelée sur laquelle un pignon est monté pour coulisser le long d'un axe longitudinal de l'arbre sans rotation vis-à-vis de celui-ci ;
- une couronne dentée destinée à être solidarisée en rotation à la roue d'aéronef ;
- des moyens de déplacement axial du pignon entre une position escamotée dans laquelle il est désengagé de la couronne dentée et une position en prise dans laquelle le pignon engrène avec la couronne dentée.

Selon l'invention, les moyens de déplacement axial du pignon comportent un ensemble vis/écrou creux s'étendant autour de l'arbre, l'un des éléments de l'ensemble vis/écrou étant axialement solidaire du pignon mais empêché de tourner par un organe d'antirotation, et l'autre des éléments de l'ensemble vis/écrou étant monté à rotation dans le carter pour être entraîné sélectivement par un moteur électrique, de sorte qu'une rotation du moteur électrique provoque un déplacement axial du pignon.

Ainsi, la rotation du moteur électrique provoque la rotation de l'élément de l'ensemble vis/écrou de la vis qui lui est solidaire en rotation, provoquant la translation de l'autre élément, et, partant, celle du pignon. L'ensemble est particulièrement compact et peut être placé en extrémité du motoréducteur pour entraîner une roue d'aéronef portant la couronne.

Selon un aspect particulier de l'invention, la liaison entre la vis et l'écrou de l'ensemble vis/écrou est réversible et un moyen de rappel élastique est installé entre l'arbre et le pignon pour rappeler le pignon vers la position escamotée.

Dans ce cas alors, un frein est prévu pour bloquer sélectivement en rotation l'élément de l'ensemble vis/écrou entraîné en rotation par le moteur électrique.

Selon un autre aspect particulier de l'invention, les moyens de déplacement et le pignon s'étendent entre deux paliers de l'arbre.

### BREVE DESCRIPTION DES FIGURES

L'invention sera mieux comprise à la lumière de la description qui suit d'un mode particulier de réalisation de l'invention, en référence à l'unique figure qui est une vue en coupe longitudinale d'un dispositif selon l'invention.

### DESCRIPTION DETAILLEE D'UN MODE PARTICULIER DE REALISATION

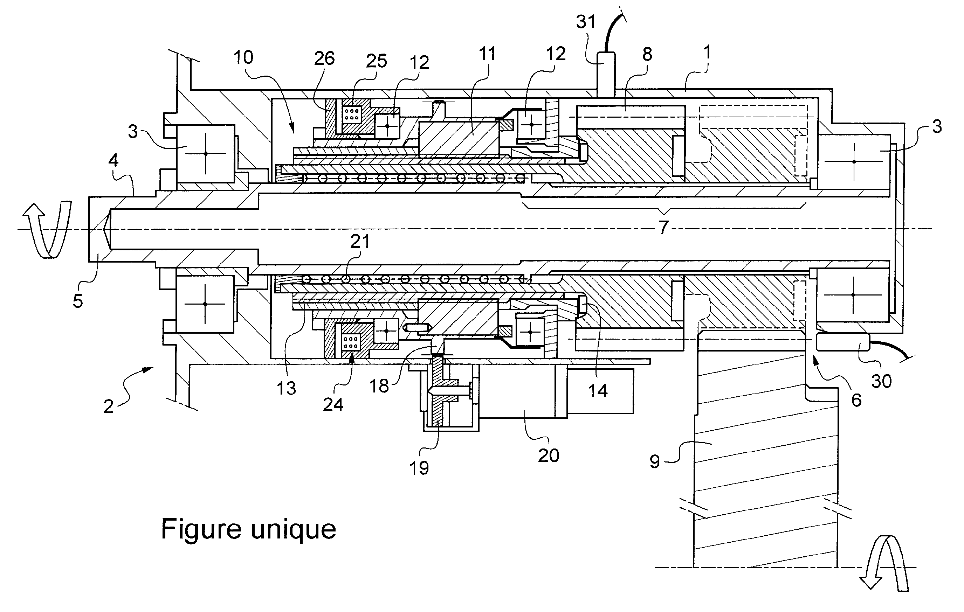

Le dispositif illustré à la figure 1 comporte un carter 1 creux comportant une face proximale 2 susceptible d'être accolée à un motoréducteur (non représenté). Le carter 1 comporte deux paliers 3 à roulement qui portent un arbre 4 ayant une extrémité 5 saillante du carter 1 au travers de la face proximale 2 pour pouvoir être entraînée en rotation par le motoréducteur, comme indiquée par la flèche courbe en traits épais.

Le carter 1 comporte une ouverture 6 en regard d'une portion cannelée 7 de l'arbre 4. Un pignon mobile 8 est engagé sur cette portion cannelée 7 pour pouvoir coulisser entre une position escamotée représentée ici et une position en prise représentée en pointillés dans laquelle le pignon mobile 8 engrène avec une couronne dentée 9, qui est par exemple solidaire d'une roue d'aéronef. Les cannelures permettent le déplacement axial du pignon tout en assurant un entraînement en rotation du pignon mobile 8 par l'arbre 4.

Le pignon mobile 8 est déplacé axialement au moyen d'un ensemble vis/écrou 10 s'étendant autour de l'arbre 4. L'ensemble vis/écrou 10 comporte ici un écrou 11 monté à rotation dans le carter 1 au moyen de deux paliers à roulements 12, et une vis 13 creuse qui coopère avec l'écrou par une liaison hélicoïdale. Une rotation de l'écrou 11 provoque un déplacement axial de la vis 13, celle-ci étant empêchée de tourner par un organe d'anti-rotation non représenté ici pour plus de clarté. L'extrémité de la vis 13 est appuyée contre le pignon mobile 8 par l'intermédiaire d'une butée à aiguilles 14. Un ressort de rappel 21 s'étend entre une butée 22 associée au pignon mobile 8 et un épaulement 23 de l'arbre 4 pour rappeler le pignon vers la position escamotée, ce qui a pour effet de plaquer le pignon mobile 8 contre la butée à aiguilles 14, et ainsi de solidariser axialement le pignon mobile 8 et la vis 13.

L'écrou 11 porte une roue externe 18 pour son entraînement par un pignon 19 entraîné par un moteur électrique 20 porté par le carter 1.

Ainsi, une rotation du moteur électrique 20 provoque une rotation de l'écrou 11, donc une translation de la vis 13, et, partant, un déplacement axial du pignon mobile 8.

Ici, la liaison entre l'écrou 11 et la vis 13 est réversible. Un frein électromagnétique 24 comportant un électroaimant 25 solidaire du carter 1 et une armature solidaire en rotation de l'écrou 11 permet de bloquer sélectivement l'écrou 11 en rotation, ce qui provoque un blocage axial du pignon mobile 8. Pour des raisons de sécurité, le frein électromagnétique 24 bloque l'écrou 11 uniquement si le frein est alimenté électriquement.

On remarquera que le pignon mobile 8 et les moyens de déplacement de celui-ci s'étendent entre les paliers 3 qui portent l'arbre 4. Les organes internes du dispositif sont donc intégrés dans le carter 1 (à part le moteur 20) et sont donc très bien protégés.

Le dispositif de l'invention fonctionne comme suit. Partant de la position représentée ici, la couronne est mise en rotation, par exemple lorsque l'aéronef roule au sol après un atterrissage. L'arbre 4 est alors mis en rotation par son moteur d'entraînement de sorte que le pignon mobile 8 atteigne une vitesse compatible avec la vitesse de rotation de la couronne dentée. Puis le moteur électrique 20 est activé de sorte à déplacer le pignon mobile 8 de la position escamotée à la position en prise, à l'encontre du ressort de rappel 21. Lorsque le pignon mobile 8 est arrivé dans la position en prise, le frein électromagnétique 24 est alimenté pour bloquer l'écrou 11, ce qui provoque le blocage axial du pignon mobile 8 dans la position en prise. Le moteur d'entraînement est alors en prise avec la roue de l'aéronef, via le dispositif de l'invention.

Partant maintenant de la position en prise, il suffit de débloquer le frein électromagnétique 24. Le ressort de rappel 21 provoque le retour du pignon mobile vers la position escamotée, compte tenu de la réversibilité de la liaison vis/écrou.

Afin de contrôler le fonctionnement du dispositif de l'invention, celui-ci est avantageusement pourvu de capteurs de position disposés sur le carter 1 pour collaborer sélectivement avec une cible solidaire en translation de la vis 13, afin de détecter dans quelle position axiale se trouve le pignon mobile 8. Ces capteurs de position peuvent également coopérer avec le pignon mobile 8 lui-même. Par ailleurs, le dispositif est avantageusement pourvu d'un capteur 30 s'étendant en regard de la couronne dentée 9 pour en mesurer la vitesse de rotation, ainsi que d'un capteur 31 disposé en regard du pignon mobile 8 lorsqu'il est en position escamoté, pour en mesurer la vitesse de rotation.

Ces capteurs de vitesse de rotation permettent de connaître la vitesse de rotation de la couronne 9, et de commander la rotation du pignon 8 par le moteur entrainant l'arbre 4 jusqu'à ce que le pignon 8 atteigne une vitesse de rotation compatible avec celle de la couronne 9, ce qui autorise alors le déplacement axial du pignon mobile 8.

L'invention n'est pas limitée à ce qui vient d'être décrit, mais englobe toute variante entrant dans le cadre défini par les revendications.

En particulier, bien que l'on ait précisé que la liaison entre la vis et l'écrou est réversible, le dispositif de l'invention fonctionne avec une liaison irréversible. Cependant, le retour du pignon mobile vers la position escamotée devra alors être commandé par le moteur électrique 20. Dans ce cas, un frein ne sera pas nécessaire.

Bien que l'on ait indiqué que la vis 13 est liée axialement au pignon mobile 8, on pourra bien sûr lier l'écrou 11 au pignon mobile 8 et faire tourner la vis 11 au moyen du moteur électrique 20. Dans ce cas, si un frein est prévu, il agira sur la vis.

Bien que l'on ait illustré le moteur électrique 20 disposé en dehors du carter du dispositif, pour faciliter son démontage, on pourra bien sûr intégrer le moteur électrique dans le carter. On pourra en particulier utiliser un moteur creux s'étendant autour de l'arbre 4 dont le rotor est lié à l'élément de la vis ou de l'écrou qui est commandé par ledit moteur.

## Revendications

1. Dispositif de connexion d'un motoréducteur à une roue d'aéronef, comportant :
- un carter portant à rotation un arbre (4) destiné à être entraîné par le motoréducteur, l'arbre ayant une portion cannelée (7) sur laquelle un pignon (8) est monté pour coulisser le long d'un axe longitudinal de l'arbre (4) sans rotation vis-à-vis de celui-ci ;
- une couronne dentée (9) destinée à être solidarisée en rotation à la roue d'aéronef ;
- des moyens de déplacement axial du pignon (8) entre une position escamotée dans laquelle il est désengagé de la couronne dentée (9) et une position en prise dans laquelle le pignon (8) engrène avec la couronne dentée (9) ;
**caractérisé en ce que** les moyens de déplacement axial du pignon (8) comportent un ensemble vis/écrou (11, 13) creux s'étendant autour de l'arbre (4), l'un des éléments de l'ensemble vis/écrou étant axialement solidaire du pignon mais empêché de tourner par un organe d'antirotation, et l'autre des éléments de l'ensemble vis/écrou étant monté à rotation dans le carter (1) pour être entraîné sélectivement par un moteur électrique (20), de sorte qu'une rotation du moteur électrique (20) provoque un déplacement axial du pignon (8).

2. Dispositif selon la revendication 1, dans lequel la liaison entre la vis et l'écrou de l'ensemble vis/écrou est réversible et un moyen de rappel élastique (21) est installé entre l'arbre et le pignon pour rappeler le pignon vers la position escamotée.

3. Dispositif selon la revendication 2, comportant un frein (24) pour bloquer sélectivement en rotation l'élément de l'ensemble vis/écrou entraîné en rotation par le moteur électrique.

4. Dispositif selon la revendication 1, dans lequel les moyens de déplacement axial du pignon et le pignon s'étendent entre deux paliers de l'arbre portés par le carter.

## Patentansprüche

1. Vorrichtung zur Verbindung eines Getriebemotors mit einem Rad eines Flugzeugs, umfassend:
- ein Gehäuse, das eine Welle (4), die dazu bestimmt ist, von dem Getriebemotor angetrieben zu werden, drehbar trägt, wobei die Welle einen gerippten Abschnitt (7) hat, auf dem ein Zahnrad (8) entlang einer Längsachse der Welle (4) ohne Drehung gegenüber derselben verschiebbar gelagert ist,
- einen Zahnkranz (9), der dazu bestimmt ist, drehfest mit dem Rad des Flugzeugs verbunden zu werden,
- Mittel zum axialen Verschieben des Zahnrads (8) zwischen einer ausgerückten Position, in der es außer Eingriff mit dem Zahnkranz (9) steht, und einer Eingriffsposition, in der das Zahnrad (8) mit dem Zahnkranz (9) in Eingriff steht,
**dadurch gekennzeichnet, dass** die Mittel zum axialen Verschieben des Zahnrads (8) eine hohle Einheit aus Schraube/Mutter (11, 13) umfassen, welche die Welle (4) umgibt, wobei eines der Elemente der Einheit aus Schraube/Mutter axial mit dem Zahnrad verbunden ist, jedoch durch ein Antirotationselement daran gehindert wird, sich zu drehen, und das andere der Elemente der Einheit aus Schraube/Mutter drehbar in dem Gehäuse (1) gelagert ist, um von einem Elektromotor (20) selektiv angetrieben zu werden, derart, dass eine Drehung des Elektromotors (20) eine axiale Verschiebung des Zahnrades (8) bewirkt.

2. Vorrichtung nach Anspruch 1, wobei die Verbindung zwischen der Schraube und der Mutter der Einheit aus Schraube/Mutter reversibel ist und ein elastisches Rückstellmittel (21) zwischen der Welle und dem Zahnrad angebracht ist, um das Zahnrad in die ausgerückte Position rückzustellen.

3. Vorrichtung nach Anspruch 2, umfassend eine Bremse (24), die dazu bestimmt ist, das Element der Einheit aus Schraube/Mutter, das von dem Elektromotor in Drehrichtung angetrieben wird, selektiv gegen Drehung zu blockieren.

4. Vorrichtung nach Anspruch 1, wobei sich die Mittel zum axialen Verschieben des Zahnrades und das Zahnrad zwischen zwei Lagern der Welle erstrecken, die von dem Gehäuse getragen werden.

## Claims

1. A device for connecting a gearmotor to an aircraft wheel, the device comprising:
• a casing rotatably carrying a shaft (4) that is to be driven by the gearmotor, the shaft having a fluted portion (7) on which a gearwheel (8) is mounted to slide along a longitudinal axis of the shaft (4) without rotating relative to the shaft;
• a toothed ring (9) for constraining to rotate with the aircraft wheel; and
• means for moving the gearwheel (8) axially between a retracted position in which it is disengaged from the toothed ring (9) and an engaged position in which the gearwheel (8) meshes with the toothed ring (9);
the device being **characterized in that** the means for moving the gearwheel (8) axially comprise a hollow screw-and-nut assembly (11, 13) extending around the shaft (4), one of the elements of the screw-and-nut assembly being axially secured to the gearwheel but prevented from rotating by an anti-rotation member, and the other element of the screw-and-nut assembly being rotatably mounted inside the casing (1) to be driven selectively by an electric motor (20) so that rotating the electric motor (20) causes the gearwheel (8) to move axially.

2. A device according to claim 1, wherein the connection between the screw and the nut of the screw-and-nut assembly is reversible and resilient return means (21) are installed between the shaft and the gearwheel in order to urge the gearwheel towards the retracted position.

3. A device according to claim 2, including a brake (24) for selectively blocking rotation of the element of the screw-and-nut assembly that is driven in rotation by the electric motor.

4. A device according to claim 1, wherein the gearwheel and the means for moving the gearwheel axially extend between two bearings of the shaft that are carried by the casing.
